(19) Europäisches Patentamt / European Patent Office / Office européen des brevets

(11) **EP 4 256 666 B1**

(12) **EUROPÄISCHE PATENTSCHRIFT**

(45) Veröffentlichungstag und Bekanntmachung des Hinweises auf die Patenterteilung:
**16.10.2024   Patentblatt 2024/42**

(21) Anmeldenummer: **22734171.6**

(22) Anmeldetag: **31.05.2022**

(51) Internationale Patentklassifikation (IPC):
**H02J 3/00** $^{(2006.01)}$        **H02J 3/46** $^{(2006.01)}$

(52) Gemeinsame Patentklassifikation (CPC):
**H02J 3/00; H02J 3/466**

(86) Internationale Anmeldenummer:
**PCT/EP2022/064734**

(87) Internationale Veröffentlichungsnummer:
**WO 2023/030705 (09.03.2023 Gazette 2023/10)**

(54) **VERFAHREN UND SYSTEM ZUR REGELUNG EINER STROMVERSORGUNG DURCH EIN LOKALES ELEKTRISCHES VERSORGUNGSNETZ**

METHOD AND SYSTEM FOR CONTROLLING POWER SUPPLY THROUGH A LOCAL ELECTRIC POWER NETWORK

PROCÉDÉ ET SYSTÈME DE RÉGULATION D'UNE ALIMENTATION ÉLECTRIQUE AU MOYEN D'UN RÉSEAU LOCAL D'ALIMENTATION ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.08.2021   EP 21194117**

(43) Veröffentlichungstag der Anmeldung:
**11.10.2023   Patentblatt 2023/41**

(73) Patentinhaber: **Fronius International GmbH
4643 Pettenbach (AT)**

(72) Erfinder:
- **DANMAYR, Joachim**
  **4643 Pettenbach (AT)**
- **WOSKI, Michael**
  **4643 Pettenbach (AT)**

(74) Vertreter: **Bratovic, Nino Maria
Bratovic IP
Lissi-Kaeser-Straße 20
80797 München (DE)**

(56) Entgegenhaltungen:
WO-A2-2012/037989        US-A1- 2015 280 436
US-B1- 11 056 912        US-B1- 6 496 342

**Beschreibung**

Die Erfindung betrifft ein Verfahren und ein System zur Regelung einer Stromversorgung durch ein lokales elektrisches Versorgungsnetz, insbesondere ein lokales Versorgungsnetz zur Bereitstellung einer Ladeinfrastruktur für Elektrofahrzeuge.

US 11,056,912 B1 beschreibt ein Planungsverfahren zur Optimierung eines Energieversorgungssystems mit mehreren hierarchisch angeordneten Clustern. Die Cluster können sich in verschiedenen Spannungsebenen befinden und neben elektrischen Lasten auch elektrische Energiespeicher und elektrische Energiequellen umfassen.

Zum Laden regelbarer Lasten kann ein lokales elektrisches Versorgungsnetz verwendet werden. Bei diesen regelbaren Lasten kann es sich beispielsweise um Elektrofahrzeuge einer Fahrzeugflotte handeln. Werden dabei eine Vielzahl elektrischer Fahrzeuge durch das lokale Versorgungsnetz zur selben Zeit geladen, kann es zu hohen Lastspitzen kommen. Daher werden herkömmliche lokale Versorgungsnetze als Ladeinfrastruktur für Elektrofahrzeuge auf eine Maximallast hin ausgelegt, um insbesondere ein Auslösen von Überstromsicherungen oder einen möglichen Kabelbrand zu verhindern. Dies führt zu einem vergleichsweisen hohen Aufwand zur Bereitstellung der nötigen Infrastruktur, insbesondere wenn man die relativ kurzen Zeiten bzw. Zeiträume betrachtet, bei denen tatsächlich eine Maximalauslastung tatsächlich auftritt. Das Auslegen der Ladeinfrastruktur auf die maximalen Lastspitzen bei herkömmlichen elektrischen lokalen Versorgungsnetzen ist notwendig, da die Regelstrecken nicht eindeutig bestimmt werden können und die verschiedenen Lasten keine einheitliche Ladecharakteristik aufweisen. Bei herkömmlichen regelbaren Lasten, insbesondere Batterien von Elektrofahrzeugen, unterscheiden sich die Ansprechzeiten, die Anregelzeiten und die Ausregelzeiten erheblich, insbesondere in Abhängigkeit vom Hersteller des jeweiligen Fahrzeuges. Darüber hinaus ist die Ladeinfrastruktur derart auszulegen, dass sie auch eine inhomogene, nicht vorhersehbare Mischung unterschiedlicher Elektrofahrzeuge mit unterschiedlichsten Ladecharakteristiken zuverlässig aufladen kann. Erschwerend kommt hinzu, dass jederzeit ein weiteres Elektrofahrzeug an die Ladeinfrastruktur angeschlossen werden kann und jederzeit ein Elektrofahrzeug von der Ladeinfrastruktur entfernt werden kann. Darüber hinaus befinden sich neben den Elektrofahrzeugen als Lasten auch weitere unkontrollierbare Lasten bzw. Verbrauchseinheiten an verschiedenen Zählpunkten, die ebenfalls beliebig hinsichtlich der von ihnen verbrauchten elektrischen Leistung variieren können.

Es ist daher eine Aufgabe der vorliegenden Erfindung, ein Verfahren und ein entsprechendes System zur Regelung einer Stromversorgung durch ein lokales elektrisches Versorgungsnetz zu schaffen, welches die oben genannten Nachteile vermeidet und eine zuverlässige Stromversorgung auch bei einer Vielzahl heterogener dynamischer Lasten mit unterschiedlichen Lade- und/oder Verbrauchscharakteristiken gewährleistet.

Diese Aufgabe wird erfindungsgemäß mit einem Verfahren zur Regelung einer Stromversorgung durch ein lokales elektrisches Versorgungsnetz mit den in Patentanspruch 1 angegebenen Merkmalen gelöst.

Die Erfindung schafft demnach ein Verfahren zur Regelung einer Stromversorgung durch ein lokales elektrisches Versorgungsnetz, wobei das lokale Versorgungsnetz einen Wurzelknoten und Endknoten aufweist, die in einer Baumstruktur miteinander hierarchisch verschaltet sind, wobei ausgehend von dem Wurzelknoten der Baumstruktur elektrische Ströme, die zwischen einem übergeordneten in einer Hierarchieebene des Versorgungsnetzes befindlichen Verteil-Knoten über Stromleitungen des Versorgungsnetzes und einem oder mehreren untergeordneten in einer direkt darunterliegenden Hierarchieebene des Versorgungsnetzes befindlichen Knoten fließen, über alle Hierarchieebenen des Versorgungsnetzes hinweg bis hin zu den Endknoten des lokalen Versorgungsnetzes iterativ so lange angepasst werden, bis die Summe der zwischen dem jeweiligen übergeordneten Verteil-Knoten des Versorgungsnetzes und dessen untergeordnete Knoten fließenden Ströme innerhalb zulässiger Stromgrenzwerte des betreffenden übergeordneten Verteil-Knotens und der Endknoten liegen.

Bei den Endknoten des lokalen Versorgungsnetzes kann es sich um dynamische Lasten, beispielsweise Batterien von Elektrofahrzeugen, handeln, die elektrischen Strom verbrauchen, oder um Erzeuger, beispielsweise Photovoltaikanlagen, die elektrischen Strom generieren und in das lokale Versorgungsnetz einspeisen.

Das lokale Versorgungsnetz ist ein von einem herkömmlichen Stromanbieter unabhängiges lokales Versorgungsnetz eines Privathaushaltes oder eines Unternehmens. Beispielsweise verfügt ein Unternehmen über eine Flotte von Elektrofahrzeugen mit aufladbaren Batterien, welche mittels des lokalen elektrischen Versorgungsnetzes des Unternehmens aufgeladen werden. Das lokale Versorgungsnetz kann über eigene Stromgeneratoren bzw. Stromerzeugungseinheiten verfügen, beispielsweise über eine lokal vorhandene Photovoltaikanlage.

Das lokale Versorgungsnetz kann von einem öffentlichen Stromversorgungsnetz unabhängig betrieben werden. Bei einer möglichen Ausführungsform kann das lokale elektrische Versorgungsnetz auch an einem Kopplungspunkt mit dem öffentlichen Stromversorgungsnetz verbunden sein und mit diesem Energie bzw Ströme austauschen.

Das erfindungsgemäße Verfahren bietet den Vorteil, dass es eine Vielzahl unterschiedlicher Batterien bzw. Elektrofahrzeuge, die unterschiedliche Ladecharakteristiken aufweisen, zuverlässig aufladen kann, wobei Lastspitzen vermieden werden. Das erfindungsgemäße Verfahren und System ist somit in der Lage, eine Vielzahl unterschiedlicher Lasten mit dynamischen Lade- bzw. Verbrauchscharakteristiken zuverlässig zu regeln und mit Strom zu versorgen. Die an dem Versorgungsnetz angeschlossenen regelbaren Lasten und/oder regelbaren Stromerzeugungseinheiten können dabei während des Betriebes des lokalen elektrischen Versorgungsnetzes durch Personen angeschlossen oder davon entfernt werden.

Das erfindungsgemäße Verfahren eignet sich auch zur homogenen Verteilung von Lade- bzw. Verbrauchsströmen. Das erfindungsgemäße Verfahren ist auch geeignet für ein System, das aus mehreren kaskadierten Ladeinfrastrukturen besteht, die sowohl hierarchisch als auch auf einer Ebene existieren können. Unabhängig von der Verschaltung der Knoten wird dabei sichergestellt, dass die zur Verfügung stehende Energie in gleiche Teile oder vordefinierte Anteile für alle Anschlusspunkte des lokalen Versorgungsnetzes aufgeteilt wird und dass diese Aufteilung auch im Falle einer Rückregelung der entsprechenden Leistung bestehen bleibt. Weiterhin wird bei dem erfindungsgemäßen Verfahren sichergestellt, dass eine Ladeleistung bei Wegfall bzw. Entfernung einer regelbaren Last in gleichem Maße gesteigert wird, ohne dabei eine Überlast zu verursachen oder verfügbare Netzkapazitäten nicht optimal auszunutzen.

Es muss sich dabei nicht zwingend um eine Überlast handeln. Es kann sich auch eine Limitierung der bezogenen Leistung vom Energieversorger handeln (Leistungspreis), d.h. das Verfahren bietet sozusagen einen Schutz vor zu hohen Kosten. Ferner kann das Verfahren bei Nulleinspeisung eingesetzt werden, d.h. es darf kein Strom in das Netz eingespeist werden.

Das erfindungsgemäße Verfahren zur Regelung einer Stromversorgung durch ein lokales elektrisches Versorgungsnetz erlaubt es, die Lade- bzw. Verbrauchsleistung bei einer Vielzahl unterschiedlicher regelbarer Lasten derart zu regeln, dass eine maximale Stromlast über einen Netzbezugspunkt des lokalen Versorgungsnetzes nicht überschritten wird. Hierzu verwendet das erfindungsgemäße Verfahren bei einer möglichen Ausführungsform einen Regelalgorithmus, der es ermöglicht, kaskadierte Messpunkte virtuell abzubilden und durch gezielte Reduktion von elektrischen Leistungen der an dem jeweiligen Messpunkt angeschlossenen Elektrofahrzeuge bzw. Lasten einen Maximalstrom unterhalb der jeweiligen vorgegebenen Grenzwerte an den jeweiligen Messpunkten zu halten und zugleich die volle erlaubte elektrische Leistung an die zur Verfügung stehenden Ladepunkte der regelbaren Lasten aufzuteilen.

Bei einer möglichen Ausführungsform des erfindungsgemäßen Verfahrens weisen die Endknoten des Versorgungsnetzes regelbare oder nicht regelbare Lasten auf, die über das lokale Versorgungsnetz mit elektrischem Strom versorgt oder geladen werden.

Bei einer weiteren möglichen Ausführungsform des erfindungsgemäßen Verfahrens weisen die Endknoten des Versorgungsnetzes zudem regelbare oder nicht regelbare Stromgeneratoren auf, die einen elektrischen Strom in das lokale Versorgungsnetz lokal einspeisen. Bei diesen Stromgeneratoren handelt es sich beispielsweise um Photovoltaikgeneratoren.

Bei einer weiteren möglichen Ausführungsform des erfindungsgemäßen Verfahrens empfängt jeder Knoten des Versorgungsnetzes über einen oder mehrere erste Stromanschlüsse des jeweiligen Knotens elektrische Ströme von übergeordneten Verteil-Knoten des lokalen Versorgungsnetzes.

Darüber hinaus kann jeder Verteil-Knoten elektrische Ströme über einen oder mehrere zweite Stromanschlüsse des jeweiligen Verteil-Knotens an dessen untergeordnete Knoten innerhalb des lokalen Versorgungsnetzes abgeben.

Falls untergeordnete Endknoten, die direkt oder indirekt über weitere Verteilknoten, an einen übergeordneten Verteilknoten angeschlossen sind, Ströme generieren kann der übergeordneter Verteilknoten über zugehörige zweite Stromanschlüsse auch von diesen ihm untergeordneten Knoten die dort generierten elektrischen Ströme beziehen bzw. empfangen.

Bei einer weiteren möglichen Ausführungsform des erfindungsgemäßen Verfahrens werden die zwischen einem übergeordneten Verteil-Knoten des lokalen Versorgungsnetzes und dessen untergeordnete Knoten fließenden elektrischen Ströme durch an den Knoten vorgesehene Stromsensoren bzw. Strommessmodule gemessen.

Bei einer weiteren möglichen Ausführungsform des erfindungsgemäßen Verfahrens werden Stromwerte der von den Stromsensoren gemessenen Ströme über Kommunikationsverbindungen an eine zentrale Steuereinheit des lokalen Versorgungsnetzes übermittelt, die auf Basis der von den Stromsensoren eines Knotens übermittelten Stromwerte für den Knoten einen Summenstromwert aller gemessenen elektrischen Ströme berechnet.

Bei einer weiteren möglichen Ausführungsform des erfindungsgemäßen Verfahrens wird durch die zentrale Steuereinheit des lokalen Versorgungsnetzes für jeden übergeordneten Verteil-Knoten ein Überschussstromwert als Differenz zwischen dem aktuell von dem jeweiligen übergeordneten Verteil-Knoten an dessen untergeordnete Knoten abgegebenen elektrischen Strom und einem Stromgrenzwert des jeweiligen übergeordneten Verteil-Knotens berechnet.

Bei einer weiteren möglichen Ausführungsform des erfindungsgemäßen Verfahrens werden durch die zentrale Steuereinheit des lokalen Versorgungsnetzes der für jeden übergeordneten Verteil-Knoten des Versorgungsnetzes berechnete Überschussstromwert durch den berechneten Summenstromwert aller von dem jeweiligen übergeordneten Verteil-Knoten an dessen untergeordnete Knoten abgegebenen elektrischen Ströme zur Berechnung eines Aufteilungsfaktors für den jeweiligen übergeordneten Verteil-Knoten geteilt.

Bei einer weiteren möglichen Ausführungsform des erfindungsgemäßen Verfahrens werden die durch die zentrale Steuereinheit des lokalen Versorgungsnetzes die Stromgrenzwerte der untergeordneten Knoten in Abhängigkeit des für deren übergeordnete Verteil-Knoten berechneten Aufteilungsfaktors aktualisiert.

Bei einer weiteren möglichen Ausführungsform des erfindungsgemäßen Verfahrens wird die elektrische Leistung einer regelbaren Last eines Endknotens des Versorgungsnetzes durch einen Leistungscontroller des Endknotens entsprechend dem aktualisierten Stromgrenzwert des Endknotens eingestellt , wobei der Leistungscontroller des Endknotens den aktualisierten Stromgrenzwert von der zentralen Steuereinheit des lokalen Versorgungsnetzes über eine zugehörige Kommunikationsverbindung erhält.

Bei einer weiteren möglichen Ausführungsform des erfindungsgemäßen Verfahrens weisen die regelbaren Lasten des lokalen Versorgungsnetzes Elektrofahrzeuge mit Fahrzeugbatterien auf, die über das lokale Versorgungsnetz aufgeladen werden.

Bei einer weiteren möglichen Ausführungsform des erfindungsgemäßen Verfahrens werden zur Steigerung der elektrischen Leistung der regelbaren Lasten des lokalen Versorgungsnetzes ausgehend von dessen Wurzelknoten über alle Hierarchieebenen des lokalen Versorgungsnetzes hinweg bis hin zu den Endknoten die Stromgrenzwerte der Knoten des lokalen Versorgungsnetzes iterativ erhöht.

Hierdurch kann die Ladeleistung bei Wegfall von Lasten wieder in gleichem Maße gesteigert werden, ohne dabei jedoch eine Überlast zu verursachen oder verfügbare Netzkapazitäten des lokalen Versorgungsnetzes nicht optimal auszunutzen.

Die Erfindung schafft ferner gemäß einem weiteren Aspekt ein lokales Versorgungsnetz zur Versorgung von Lasten mit elektrischem Strom mit den in Patentanspruch 12 angegebenen Merkmalen.

Die Erfindung schafft demnach ein lokales Versorgungsnetz zur Versorgung von Lasten mit elektrischem Strom, wobei das lokale Versorgungsnetz einen Wurzelknoten und Endknoten aufweist, die in einer Baumstruktur miteinander hierarchisch verschaltet sind, wobei durch eine zentrale Steuereinheit des lokalen Versorgungsnetzes ausgehend von dem Wurzelknoten der Baumstruktur elektrische Ströme, die zwischen einem übergeordneten in einer Hierarchieebene des Versorgungsnetzes befindlichen Verteil-Knoten über Stromleitungen des Versorgungsnetzes und einem oder mehreren untergeordneten in einer direkt darunterliegenden Hierarchieebene des lokalen Versorgungsnetzes befindlichen Knoten fließen, über alle Hierarchieebenen des lokalen Versorgungsnetzes hinweg bis hin zu den Endknoten des lokalen Versorgungsnetzes iterativ so lange anpassbar sind, bis die Summe der Stromwerte der zwischen dem jeweiligen übergeordneten Verteil-Knoten des lokalen Versorgungsnetzes und dessen untergeordnete Knoten fließenden elektrischen Ströme innerhalb zulässiger Stromgrenzwerte des betreffenden übergeordneten Verteil-Knotens und der Endkotenliegen.

Bei einer möglichen Ausführungsform des erfindungsgemäßen Versorgungsnetzes weist die zentrale Steuereinheit des lokalen Versorgungsnetzes einen Datenspeicher auf, der Stromgrenzwerte der Knoten des lokalen Versorgungsnetzes und durch Stromsensoren gemessene Stromwerte von zwischen Knoten des Versorgungsnetzes fließenden elektrischen Ströme speichert.

Bei einer weiteren möglichen Ausführungsform des erfindungsgemäßen Versorgungsnetzes sind an Verteil-Knoten des lokalen Versorgungsnetzes Endknoten anschließbar oder Endknoten von Verteil-Knoten des lokalen Versorgungsnetzes entfernbar.

Im Weiteren werden mögliche Ausführungsformen des erfindungsgemäßen Verfahrens und des erfindungsgemäßen lokalen elektrischen Versorgungsnetzes unter Bezugnahme auf die beigefügten Figuren näher erläutert.

Es zeigen:

Fig. 1         ein Ausführungsbeispiel eines erfindungsgemäßen lokalen elektrischen Versorgungsnetzes;

Fig. 2         ein Blockschaltbild eines in dem erfindungsgemäßen elektrischen Versorgungsnetz befindlichen Knotens;

Fig. 3         ein Blockschaltbild einer in dem erfindungsgemäßen elektrischen Versorgungsnetz vorhandenen dynamischen Last;

Fig. 4         ein Ablaufdiagramm zur Darstellung eines exemplarischen Ausführungsbeispiels eines erfindungsgemäßen Verfahrens zur Regelung einer Stromversorgung durch ein lokales elektrisches Versorgungsnetz;

Figuren 5, 6     Ablaufdiagramme zur Darstellung von Unterroutinen des in Fig. 4 dargestellten Verfahrens.

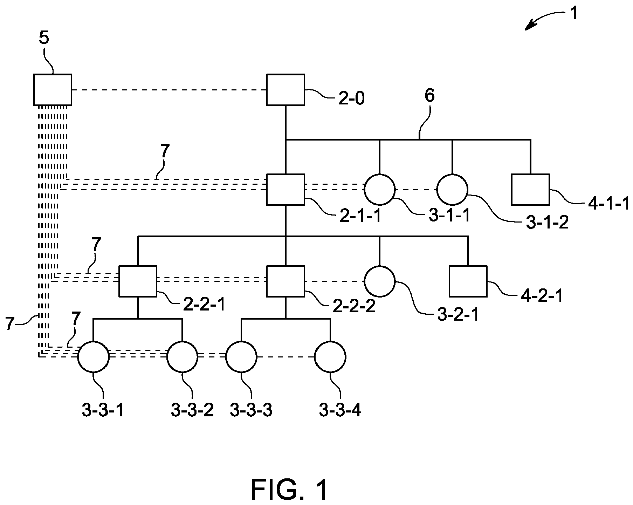

Fig. 1 zeigt ein exemplarisches Ausführungsbeispiel eines lokalen Versorgungsnetzes 1, bei dem ein Verfahren zur Regelung einer Stromversorgung gemäß einem Aspekt der vorliegenden Erfindung ausgeführt werden kann. Das in Fig. 1 dargestellte lokale Versorgungsnetz 1 ist bei einer möglichen Ausführungsform ein lokales elektrisches Versorgungsnetz eines Unternehmens oder eines Dienstleistungsanbieters. Das lokale elektrische Versorgungsnetz 1 kann unabhängig von einem öffentlichen Versorgungsnetz betrieben werden. Bei einer möglichen Ausführungsform kann das lokale elektrische Versorgungsnetz 1 über einen Anschlusspunkt mit einem öffentlichen Stromversorgungsnetz SVN verbunden sein und mit diesem Strom bzw. Energie bei Bedarf austauschen. Das lokale elektrische Versorgungsnetz 1 verfügt über Knoten, die in einer Baumstruktur miteinander hierarchisch verschaltet sind, wie in Fig. 1 beispielhaft dargestellt. Die Struktur des lokalen elektrischen Versorgungsnetzes 1 kann durch einen azyklisch ungerichteten Graphen dargestellt werden. Die verschiedenen Knoten des lokalen elektrischen Versorgungsnetzes 1 sind über Stromleitungen 6 miteinander verbunden, die als durchgezogene Linien in Fig.1 dargestellt sind Das lokale Versorgungsnetz 1 verfügt über Knoten 2 zur Stromverteilung und über Endknoten 3, 4. Die Endknoten 3 verfügen über eine eigene Kommunikationsverbindung 7 mit einer zentralen Steuereinheit 5 des lokalen Versorgungsnetzes 1 wohingegen die Endknoten 4 keine derartige Kommunikationsverbindung 7 mit der zentralen Steuereinheit 5 haben und deren Betriebsverhalten somit der zentralen Steuereinheit 5 nicht bekannt ist. Es kann sich bei dem Endknoten 4 auch um eine komplett unbekannte Last handeln, d.h. die zentrale Steuereinheit 4 kennt nicht das Betriebsverhalten des Endknoten 4 und der Endknoten 4 ist weder steuer- noch regelbar. Bei den Endknoten 3, 4 kann es sich um regelbare oder um nicht regelbare Lasten handeln, die durch das lokale elektrische Versorgungsnetz 1 mit Strom versorgt werden können. Der zur Verfügung gestellte elektrische Strom kann beispielsweise zum Aufladen von Batterien innerhalb von Endknoten 3,4 verwendet werden. Endknoten 3,4 weisen keine untergeordnete Knoten auf, d.h. sie verteilen keinen von einem übergeordneten Verteil-Knoten 2 erhaltenen elektrischen Strom weiter.

Das lokale Verteilnetz 1 umfasst einen (einzigen)Wurzelknoten, Verteilknoten sowie Endknoten. Der Wurzelknoten bildet den Startpunkt, d.h. den hierarchisch am höchsten stehende Knoten. Jeder Verteilknoten hängt an einem hierarchisch übergeordneten Knoten und ist mit weiteren hierarchisch untergeordneten Knoten verbunden. Ein Endknoten ist ein Knoten, der selbst keine weiteren untergeordneten Knoten hat.

Weiterhin können die Endknoten 3,4 des lokalen Versorgungsnetzes 1 auch regelbare oder nicht regelbare Stromgeneratoren aufweisen, die elektrische Ströme I in das lokale Versorgungsnetz 1 einspeisen. Diese Stromgeneratoren umfassen beispielsweise Photovoltaikmodule oder Photovoltaikanlagen.

Das lokale Versorgungsnetz 1 hat in der obersten Hierarchieebene der Baumstruktur (j=0) einen Wurzelknoten 2-0 und in der darunterliegenden Hierarchieebene (j>0) mehrere Endknoten 3, 4, die in der in Fig.1 dargestellten Baumstruktur miteinander hierarchisch verschaltet sind. Das lokale Versorgungsnetz 1 verfügt somit über mehrere Hierarchieebenen j, bei denen Verteil-Knoten 2 und Endknoten 3,4 jeweils an einen übergeordneten Verteil-Knoten 2 innerhalb der Hierarchie über eine oder mehrere Stromversorgungsleitungen 6 angeschlossen sind.

Das lokale elektrische Versorgungsnetz 1 weist eine zentrale Steuereinheit 5 auf, die über drahtlose oder drahtgebundene Kommunikationsverbindungen 7 mit den Verteil-Knoten 2 des Versorgungsnetzes 1 verbunden ist, wie durch gestrichelte Linien in Fig. 1 schematisch angedeutet. Darüber hinaus können Endknoten 3, insbesondere auch dynamische Lasten, über Kommunikationsverbindungen 7 mit der zentralen Steuereinheit 5 verbunden sein, wie in Fig. 1 beispielhaft dargestellt. Andere Endknoten 4 umfassen beispielsweise dynamische Lasten mit einer unbekannten Lade- bzw. Verbrauchscharakteristika, insbesondere Endknoten 4, die über keine Kommunikationsverbindung 7 mit der zentralen Steuereinheit 5 verfügen.

Jeder Knoten innerhalb des Versorgungsnetzes 1 ist ein Knoten eines bestimmten Typs i innerhalb einer Hierarchieebene j und bildet den k-ten Knoten dieses Typs innerhalb der jeweiligen Hierarchieebene j. Demnach ist ein Knoten ijk ein Knoten des Typs i (i= 2 oder 3 oder 4) in der Hierarchieebene j und bildet dabei den k-ten Knoten dieses Typs innerhalb der betreffenden Hierarchieebene j. Beispielsweise bildet der Verteil-Knoten 2-1-1 einen Versorgungsknoten bzw. übergeordneten Knoten innerhalb der Hierarchieebene 1 (j=1) und ist der erste und einzige Knoten dieses Typs innerhalb dieser ersten Hierarchieebene. Die übrigen Knoten 3-1-1, 3-1-2 und 4-1-1 bilden Endknoten 3, die nicht mit weiteren untergeordneten Knoten über Stromleitungen 6 verbunden sind. Dabei bilden die Knoten 3-1-1, 3-1-2 dynamische Lasten, die Strom verbrauchen und über eine Kommunikationsverbindung 7 mit der zentralen Steuereinheit 5 des Versorgungsnetzes 1 verbunden sind und deren Verhalten somit der zentralen Steuereinheit 5 bekannt sind. Es gibt zwei Knoten dieser Art in der ersten Hierarchieebene (j=1), nämlich den ersten (k=l) Endknoten 3-1-1 und den zweiten (k=2) Endknoten 3-1-2. Darüber hinaus befindet sich in der ersten Hierarchieebene (j=1) ein Endknoten 4, dessen dynamisches Lastverhalten nicht bekannt ist und der über keine Kommunikationsverbindung 7 mit der zentralen Steuereinheit 5 verfügt, nämlich der Knoten 4-1-1.

In der zweiten Hierarchieebene (j=2) befinden sich ebenfalls vier Knoten, wobei zwei Knoten 2-2-1 und 2-2-2 Versorgungs- bzw. Verteilknoten sind, die mit weiteren untergeordneten Knoten innerhalb der hierarchischen Baumstruktur über Stromleitungen 6 verbunden sind. Daneben befindet sich in der zweiten Hierarchieebene (j=2) ein Endknoten 3, dessen Last- bzw. Verbrauchsverhalten bekannt ist und der über eine Kommunikationsverbindung 7 mit der zentralen Steuereinheit 5 verbunden ist, nämlich der Knoten 3-2-1. Ein vierter Knoten innerhalb der zweiten Hierarchieebene (j=2), nämlich der Endknoten 4-2-1 weist ein nicht bekanntes Last- bzw. Verbrauchsverhalten auf, da keine Kommunikationsverbindung 7 zu der zentralen Steuereinheit 5 vorhanden ist.

In der untersten , d.h. dritten Hierarchieebene (j=3) des in Fig. 1 dargestellten lokalen elektrischen Versorgungsnetzes 1 befinden sich nur Endknoten 3, wobei in dem angegebenen Beispiel diese Endknoten 3 jeweils über Kommunikationsverbindungen 7 mit der zentralen Steuereinheit 5 des Versorgungsnetzes 1 verbunden sind und deren Last- bzw. Verbrauchsverhalten somit auch erkannt bzw. überwacht werden kann.

In der obersten Hierarchieebene (j=0) des lokalen elektrischen Versorgungsnetzes 1 befindet sich der Wurzelknoten 2-0, der mit den Knoten 2-1-1, 3-1-1, 3-1-2 und 4-1-1 in der nächsten darunterliegenden Hierarchieebene (j=1) über Stromleitungen 6 verbunden ist. Der Wurzelknoten 2-0 ist ebenfalls über eine Kommunikationsverbindung 7 mit der zentralen Steuereinheit 5 verbunden, wie in Fig. 1 dargestellt. Das lokale Versorgungsnetz 1 weist somit einen einzigen Wurzelknoten 2-0 und mehrere Endknoten 3,4, auf, die in einer Baumstruktur miteinander hierarchisch in einer oder mehreren Hierarchieebenen verschaltet sind. Die Knoten 2,3,4 in den verschiedenen Hierarchieebenen sind über Stromleitungen 6 miteinander verschaltet bzw. verbunden. Über die Stromleitungen 6 des lokalen Versorgungsnetzes 1 fließt jeweils ein Gleichstrom (DC)oder ein Wechselstrom (AC).

Die Endknoten 3,4 des Versorgungsnetzes 1 können regelbare oder nicht regelbare Lasten aufweisen, die über das Versorgungsnetz 1 mit elektrischem Strom versorgt oder geladen werden. Darüber hinaus können die Endknoten 3,4 des Versorgungsnetzes 1, welche Blätter innerhalb der Baumstruktur des lokalen Versorgungsnetzes 1 bilden, auch regelbare oder nicht regelbare Stromgeneratoren aufweisen, die elektrischen Strom in das lokale Versorgungsnetz 1 einspeisen.

Jeder Knoten 2,3,4 des Versorgungsnetzes 1, d.h. jeder Verteil-Knoten 2 und jeder Endknoten 3,4 kann über einen oder mehrere erste Stromanschlüsse verfügen, über den der jeweilige Knoten 2,3,4 elektrische Ströme I von übergeordneten Verteil-Knoten 2 des lokalen Versorgungsnetzes 1 empfängt oder an diese abgibt. Darüber hinaus kann jeder Verteil-Knoten 2,des Versorgungsnetzes 1 auch über einen oder mehrere zweite Stromanschlüsse verfügen und über diese elektrischen Ströme an seine untergeordnete Knoten 2,3,4 innerhalb des lokalen Versorgungsnetzes 1 abgeben, sofern diese Lasten oder Verbrauchseinheiten aufweisen. Befinden sich an den Endknoten 3,4 Stromgeneratoren kann deren übergeordneter Verteil-Knoten 2 über seine zweiten Stromanschlüsse den dort generierten elektrischen Strom erhalten.

Die zwischen einem übergeordneten Verteil-Knoten 2 des lokalen Versorgungsnetzes 1 und dessen untergeordneten Knoten 2,3,4 in beide Richtungen fließenden elektrischen Ströme I können bei einer möglichen Ausführungsform durch an den jeweiligen Knoten vorgesehene Stromsensoren gemessen werden, wobei die gemessenen Stromwerte von den Verteil-Knoten 2 und Endknoten 3 über zugehörige Kommunikationsverbindungen 7 an die zentrale Steuereinheit 5 des Versorgungsnetzes 1 gemeldet werden.

Bei dem erfindungsgemäßen Verfahren werden ausgehend von dem Wurzelknoten 2-0 der Baumstruktur elektrische Ströme, die zwischen einem übergeordneten in einer bestimmten Hierarchieebene j des Versorgungsnetzes 1 befindlichen Knoten über Stromleitungen 6 des Versorgungsnetzes 1 und einem oder mehreren untergeordneten in einer direkt darunterliegenden Hierarchieebene (j+1) des Versorgungsnetzes 1 befindlichen Knoten fließen, über alle Hierarchieebenen des Versorgungsnetzes 1 hinweg bis hin zu den Endknoten 3,4, des lokalen Versorgungsnetzes 1 iterativ so lange angepasst, bis die Summe der zwischen dem jeweiligen übergeordneten Verteil-Knoten 2 des Versorgungsnetzes 1 und dessen untergeordneten Knoten 2,3,4 fließenden Ströme innerhalb zulässiger Stromgrenzwerte des betreffenden übergeordneten Verteil-Knotens 2 und der Endknoten 3,4 liegen.

Dieses computerimplementierte Verfahren zur Regelung der Stromversorgung durch das lokale elektrische Versorgungsnetz 1 wird vorzugsweise durch einen Prozessor der zentralen Steuereinheit 5 des Stromversorgungsnetz 1 in Echtzeit ausgeführt. Die Stromwerte der von den Stromsensoren gemessenen Ströme werden über die Kommunikationsverbindungen 7 an die zentrale Steuereinheit 5 des lokalen Versorgungsnetzes 1 übermittelt. Diese berechnet auf Basis der von den Stromsensoren eines Knotens 2,3,4 übermittelten Stromwerte bei einer möglichen Ausführungsform für den jeweiligen Knoten einen Summenstromwert der dort gemessenen elektrischen Ströme. Die zentrale Steuereinheit 5 des Versorgungsnetzes 1 kann für jeden übergeordneten Verteil-Knoten 2 bei einer möglichen Ausführungsform einen Überschussstromwert als Differenz zwischen dem aktuell von dem jeweiligen in einer Hierarchieebene j befindlichen übergeordneten Verteil-Knoten 2-j an dessen untergeordnete Knoten 2-(j+1)-k,3-(j+1)-k,4-(j+1)-k abgegebenen elektrischen Ströme und einen Stromgrenzwert des jeweiligen übergeordneten Verteil-Knotens 2 berechnen. Durch die zentrale Steuereinheit 5 wird ferner für jeden übergeordneten Verteil-Knoten 2-j des lokalen Versorgungsnetzes 1 der für den übergeordneten Verteil-Knoten 2-j des Versorgungsnetzes 1 berechnete Überschussstromwert durch den berechneten Summenstromwert aller von dem jeweiligen übergeordneten Verteil-Knoten 2-j der Hierarchieebene j an dessen untergeordnete Knoten 2,3,4 der Hierarchieebene j+1 abgegebenen elektrischen Ströme I zur Berechnung eines Aufteilungsfaktors AF durch den jeweiligen übergeordneten Verteil-Knoten 2 geteilt. Anschließend werden durch die zentrale Steuereinheit 5 des Versorgungsnetzes 1 die Stromgrenzwerte der untergeordneten Knoten 2,3,4, die sich in der darunterliegenden Hierarchieebene j+1 befinden, in Abhängigkeit des für den übergeordneten Verteil-Knoten 2-j berechneten Aufteilungsfaktors AF automatisch aktualisiert bzw. eingestellt. Bei einer weiteren möglichen Ausführungsform des erfindungsgemäßen Verfahrens wird die elektrische Leistung P einer regelbaren Last eines Endknotens 3 des Versorgungsnetzes 1 durch einen Leistungscontroller 3C innerhalb des Endknotens 3 entsprechend dem aktualisierten Stromgrenzwert des Endknotens 3 eingestellt. Dabei erhält der Leistungscontroller 3C innerhalb des Endknotens 3 den aktualisierten Stromgrenzwert von der zentralen Steuereinheit 5 über eine Kommunikationsverbindung 7.

Die verschiedenen Endknoten 3, 4 des Versorgungsnetzes 1, wie es beispielhaft in Fig. 1 dargestellt ist, können bei einer möglichen Ausführungsform regelbare Lasten beinhalten. Diese regelbaren Lasten weisen bei einer möglichen Ausführungsform Fahrzeugbatterien von Elektrofahrzeugen auf, die über das lokale Versorgungsnetz 1 mit einem Ladestrom aufgeladen werden. Bei einer weiteren möglichen Ausführungsform des erfindungsgemäßen lokalen Versorgungsnetzes 1 können auch unterschiedliche Typen von Lasten, insbesondere auch andere Verbrauchseinheiten, neben den Fahrzeugbatterien mit Strom versorgt werden. Beispielsweise können die dynamischen Lasten 3, 4 auch Elektromotoren bzw. Elektromaschinen eines Unternehmens umfassen, welches über sein lokales Versorgungsnetz 1 zusätzlich Fahrzeugbatterien von Elektrofahrzeugen seiner Elektrofahrzeugflotte auflädt.

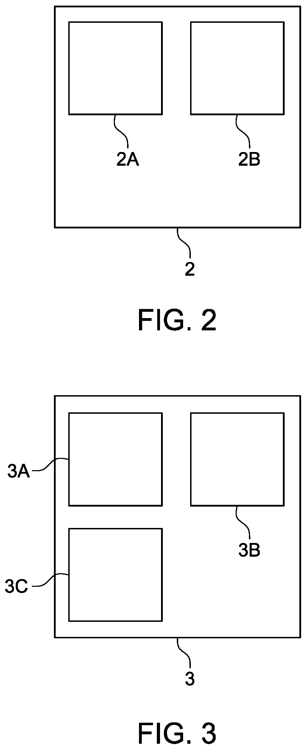

Die Figuren 2, 3 zeigen Ausführungsbeispiele von Knoten innerhalb des lokalen elektrischen Versorgungsnetzes 1. Fig. 2 zeigt schematisch einen Stromversorgungsknoten bzw. Stromverteilknoten 2 innerhalb des lokalen elektrischen Versorgungsnetzes 1. Wie in Fig. 2 dargestellt, verfügt der Knoten 2 über eine oder mehrere Stromsensoren 2A sowie über ein Kommunikationsmodul 2B zur Herstellung einer drahtlosen oder drahtgebundenen Kommunikationsverbindung über Kommunikationsleitungen 7 mit der zentralen Steuereinheit 5 des Versorgungsnetzes 1. Der Verteil-Knoten 2 in einer Hierarchieeben j verfügt über einen oder mehrere Stromeingänge zum Anschluss an übergeordnete Verteil-Knoten einer übergeordneten Hierarchieebene j-1 sowie über einen oder mehrere Stromausgänge zum Anschluss an weitere untergeordnet Knoten unterschiedlichen Typs 2,3,4 innerhalb der nächsten untergeordneten Hierarchieebene j+1 des Versorgungsnetzes 1. Die Stromwerte der über die Stromeingänge und Stromausgänge des Verteil-Knotens 2 fließenden Ströme I können über zugehörige Stromsensoren 2A des Verteil-Knotens 2 überwacht werden, wobei bei einer möglichen Ausführungsform die Stromwerte zunächst lokal gespeichert werden und anschließend über die zugehörige Kommunikationsverbindung 7 an die zentrale Steuereinheit 5 in Echtzeit übermittelt werden.

Fig. 3 zeigt schematisch ein Ausführungsbeispiel eines Endknotens 3 innerhalb des Versorgungsnetzes 1. Dieser Endknoten 3 verfügt ebenfalls über einen oder mehrere Stromsensoren 3A sowie über eine Kommunikationsverbindung 3B zur Herstellung einer Kommunikationsverbindung 7 mit der zentralen Steuereinheit 5 des lokalen Versorgungsnetzes 1. Darüber hinaus verfügt der Endknoten 3 über einen integrierten Leistungscontroller 3C, wie in Fig. 3 dargestellt. Bei einer möglichen Ausführungsform kann der Endknoten 3 eine dynamische regelbare Last beinhalten, mit der ein Stromverbrauch bzw. Last durch den Leistungscontroller 3C geregelt wird. Die elektrische Leistung P der regelbaren Last des Endknotens 3 wird durch den Leistungscontroller 3C des Endknotens 3 vorzugsweise entsprechend einem aktualisierten Stromgrenzwert des Endknotens 3 eingestellt. Hierbei erhält der Leistungscontroller 3C des Endknotens 3 diesen aktualisierten Stromgrenzwert von der zentralen Steuereinheit 5 des lokalen Versorgungsnetzes 1 über sein Kommunikationsmodul 3B und die zugehörige Kommunikationsverbindung 7 von der zentralen Steuereinheit 5. Die dynamische Last des Endknotens 3 umfasst beispielsweise eine oder mehrere Fahrzeugbatterien eines Elektrofahrzeuges, das durch das lokale Versorgungsnetz 1 aufgeladen wird.

Die anderen Endknoten 4, wie sie in Fig. 1 schematisch dargestellt sind, verfügen über keine Kommunikationsmodule 3B zum Datenaustausch mit der zentralen Steuereinheit 5.

Mit dem erfindungsgemäßen Verfahren kann die Ladeleistung P einer Flotte von regelbaren Lasten, insbesondere Elektrofahrzeugen, derart geregelt werden, dass eine maximale Stromlast an einem Netzbezugspunkt nicht überschritten wird. Zu diesem Zweck wird durch einen Prozessor der zentralen Steuereinheit 5 ein Regelalgorithmus ausgeführt, der es ermöglicht, kaskadierte Messpunkte virtuell abzubilden und durch gezielte iterative Reduktionerhöhung von Ladeleistungen der an diesen Messpunkten angeschlossenen regelbaren Lasten einen Maximalstrom innerhalb der jeweiligen Grenzwerte der Messpunkte zu halten und gleichzeitig die volle erlaubte elektrische Leistung auf die zur Verfügung stehenden Ladepunkte aufzuteilen.

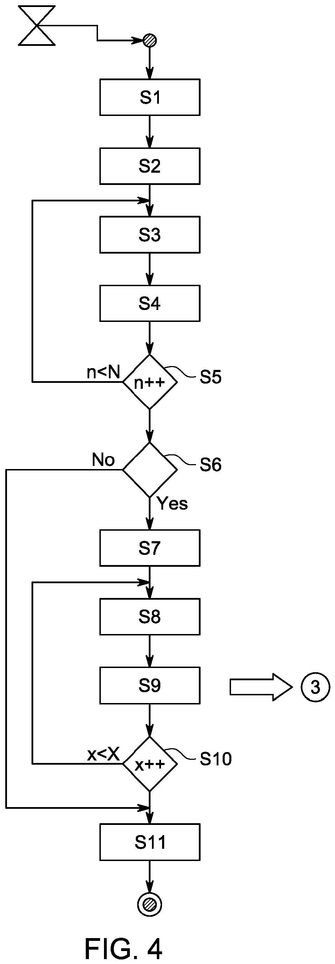

Fig. 4 zeigt ein Ablaufdiagramm zur Erläuterung eines Ausführungsbeispiels eines computerimplementierten Verfahrens zur Regelung einer Stromversorgung durch ein lokales elektrisches Versorgungsnetz 1 gemäß der Erfindung. Der in Fig. 4 dargestellte Regelalgorithmus kann durch einen Prozessor innerhalb der zentralen Steuereinheit 5 in regelmäßigen Zeitabständen periodisch, beispielsweise einmal pro Sekunde, ausgeführt werden. Der Regelalgorithmus kann auch durch ein Ereignis getriggert werden, beispielsweise bei Anschließen eines Elektrofahrzeuges an das lokale Versorgungsnetz 1 oder bei Entfernen eines Elektrofahrzeuges von dem lokalen Versorgungsnetz 1.

In einem ersten Schritt S1 wird für jeden Knoten innerhalb des Versorgungsnetzes 1 der aktuell fließende Stromwert in einem untergeordneten Knoten berechnet:

$$I_{SUM} = \sum_{i=1}^{N} I_n$$

$$(1)$$

wobei $I_n$ der aktuell fließende Strom des untergeordneten Knotens n ist und wobei N die Anzahl der untergeordneten Knoten darstellt.

In einem weiteren Schritt S2 wird der zu reduzierende elektrische Strom für den jeweiligen Knoten berechnet:

$$I_{diff} = \begin{cases} I_{act} - I_{limit} & falls\ I_{act} - I_{limit} > 0 \\ 0 & falls\ I_{act} - I_{limit} \leq 0 \end{cases}$$

$$(2)$$

Durch die zentrale Steuereinheit 5 des lokalen Versorgungsnetzes 1 wird somit für jeden übergeordneten Knoten ein Überschussstromwert als Differenz $I_{diff}$ zwischen dem aktuell von dem jeweiligen übergeordneten Knoten und dessen untergeordneten Knoten fließenden elektrischen Strom $I_{act}$ und einem Stromgrenzwert $I_{limit}$ des jeweiligen übergeordneten Knotens berechnet.

In einem weiteren Schritt S3 wird ein gewichteter Stromgrenzwert für den Knoten n berechnet:

$$I_{limit\ n} = I_n - \frac{I_n \cdot I_{diff}}{I_{SUM}}$$

$$(3)$$

Durch die zentrale Steuereinheit 5 des lokalen Versorgungsnetzes 1 wird somit für jeden übergeordneten Knoten des lokalen Versorgungsnetzes 1 der für den jeweils übergeordneten Knoten des Versorgungsnetzes 1 berechnete Überschussstromwert $I_{diff}$ durch den berechneten Summenstromwert $I_{SUM}$ aller von dem jeweiligen übergeordneten Knoten an dessen untergeordnete Knoten abgegebenen elektrischen Ströme zur Berechnung eines Aufteilungsfaktors $AF = \frac{I_{diff}}{I_{SUM}}$ geteilt. Der Stromgrenzwert für den jeweiligen untergeordneten Knoten n wird entsprechend im Schritt S4 reduziert, wie in Gleichung (3) angegeben.

In einem nachfolgenden Schritt S5 wird geprüft, ob die Berechnung für alle untergeordneten Knoten des betreffenden Knotens ausgeführt worden ist oder nicht. Falls es noch weitere untergeordnete Knoten gibt, kehrt der Vorgang von Schritt S5 zu Schritt S3 zurück, wie in Fig. 4 dargestellt. Die Schritte S1 bis S5 dienen zur Berechnung eines Stromgrenzwerts für den betreffenden Knoten innerhalb des Versorgungsnetzes 1.

In einem weiteren Schritt S6 wird festgestellt, ob die Anzahl der dynamischen Lasten innerhalb von n Knoten größer ist oder nicht. Falls dynamische Lasten vorhanden sind, erfolgt in Schritt S7 eine Berechnung des aktuellen Stromwertes für die dynamischen Lasten des betreffenden Knotens:

$$I_{SUM\ Dyn} = \sum_{x=1}^{x} I_x$$

$$(4)$$

In einem weiteren Schritt S8 wird ein gewichteter Stromgrenzwert für den dynamischen Lastknoten x berechnet:

$$I_{limit\ x} = I_x - \frac{I_x \cdot I_{diff}}{I_{SUM\ Dyn}}$$

$$(5)$$

Der berechnete Stromgrenzwert wird anschließend im Schritt S9 an den Leistungscontroller 3C innerhalb des dynamischen Lastknotens bzw. Endknotens 3 übertragen.

Im Schritt S10 wird geprüft, ob noch weitere dynamische Lastknoten vorhanden sind. Falls ja, erfolgt eine entsprechende Berechnung für diese weiteren Lastknoten in den Schritten S8, S9. Falls keine weiteren dynamischen Lastknoten vorhanden sind, wird die Schleife verlassen und eine Stromerhöhungssubroutine für alle Verteil-Knoten bzw. untergeordneten Knoten im Schritt S11 aufgerufen.

Wie man in Fig. 4 erkennen kann, wird bei dem Regelalgorithmus bei einem aktuell fließenden Strom aus einem aktuell bestehenden Stromlimit bzw. Stromgrenzwert eines Knotens ein möglicher Stromreduktionswert zur Reduzierung des elektrischen Stromes an den betreffenden Knoten berechnet. Dieser Stromwert gibt vorzugsweise an, um wie viel Ampere der jeweilige Strom in den Verteil-Knoten bzw. untergeordneten Knoten und Lasten verringert werden muss, damit ein Stromgrenzwert an dem betreffenden übergeordneten Knoten nicht mehr überschritten wird. Daraufhin kann eine paritätische Aufteilung des Stromes in Abhängigkeit der aktuell fließenden Ströme vorgenommen werden. Eine derartige paritätische Aufteilung kann bei anderen Ausführungsformen auch durch andere Gewichtungsfunktionen ersetzt werden, solange die Summe der reduzierten Ströme dem Wert des berechneten Stromreduktionswertes entspricht.

Der für den jeweiligen untergeordneten Knoten berechnete gewichtete Stromwert kann dem untergeordneten Knoten als neues Limit bzw. Grenzwert zugewiesen werden. Der untergeordneten Knoten akzeptiert einen neuen Stromgrenzwert nur, sofern dieser Wert kleiner ist als der bisherige Stromgrenzwert. Auf diese Weise kann sichergestellt werden, dass es stets nur zu einer Regelung des Stromes nach unten kommt und somit ein Gesamtlimit bzw. ein Gesamtgrenzwert für das Versorgungsnetz 1 nicht überschritten wird.

Der in Fig. 4 schematisch dargestellte Regelalgorithmus kann bei einer möglichen Ausführungsform schnell ausgeführt werden, selbst wenn die Ansprechzeiten unterschiedlich sind, da bei dem erfindungsgemäßen Regelalgorithmus mit jeder Iteration der aktuelle Stromzustand des Versorgungsnetzes 1 neu bewertet wird und so allenfalls bereits ausgeregelte Stromreduktionsanforderungen in der nächsten Bewertung miteinbezogen werden und dementsprechend geringer gewichtet werden. Im Falle, dass noch keine Ausregelung erfolgt ist, kann der Algorithmus die gleichen Werte als Ergebnis liefern, wie im letzten Iterationsschritt.

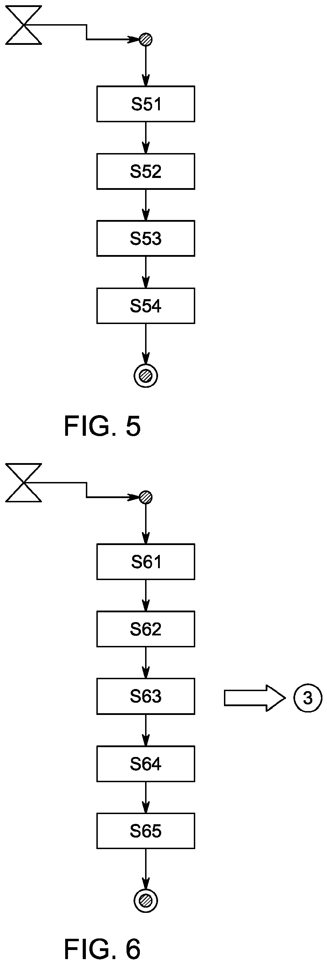

Figuren 5, 6 zeigen weitere Abläufe, die zu dem in Fig. 4 dargestellten Ablauf parallel ausgeführt werden können. Fig. 5 zeigt einen Ablauf, bei dem ein Stromwert periodisch, beispielsweise alle zwei Sekunden, erhöht wird.

Fig. 6 zeigt einen Ablauf, bei dem der dynamische Laststrom eines Endknotens periodisch, beispielsweise alle fünf Sekunden, erhöht wird. Die in den Figuren 5, 6 dargestellten Abläufe dienen dazu, die Leistung in dem Versorgungsnetz 1 gleichmäßig wieder zu erhöhen, falls wieder Netzkapazitäten zur Verfügung stehen. Diese Abläufe werden in der Regel um einen bestimmten Faktor langsamer ausgeführt als der in Fig. 4 dargestellte Reduktionsalgorithmus.

Bei dem in Fig. 5 dargestellten Ablauf wird zunächst in Schritt S51 der aktuelle Stromgrenzwert eines untergeordneten Knotens n ermittelt.

In einem weiteren Schritt S52 wird ein neuer Stromgrenzwert für den untergeordneten Knoten ermittelt, indem beispielsweise der bisherige Strom um einen vorgegebenen Stromwert von beispielsweise 10 Ampere erhöht wird. Anschließend wird n inkrementiert, um den Strom des nächsten Knotens nach dem nächsten Aufruf zu erhöhen n++. Falls n > N, dann wird n auf den Wert 1 gesetzt n = 1.

Anschließend wird in einem Schritt S53 die Funktion zur Erhöhung des Knotenstroms für alle untergeordneten Knoten aufgerufen.

Bei dem Ablauf gemäß Fig. 6 wird für jeden dynamischen Lastknoten im Schritt S61 zunächst der erste Stromgrenzwert bestimmt.

Anschließend wird im Schritt S62 ein neuer Stromgrenzwert für die dynamische Last x berechnet:

$$I_{limit\ x} = I_x + 3A$$

In diesem Beispiel wird der Stromgrenzwert beispielsweise um 3 Ampere erhöht.

Anschließend wird im Schritt S63 der berechnete Stromgrenzwert an den Leistungscontroller des dynamischen Lastknotens übertragen.

Im darauffolgenden Schritt S64 wird der Wert x inkrementiert und der Strom des nächsten dynamischen Lastknotens beim nächsten Aufruf erhöht (x++).

Falls x > X, dann x = 1.

In einem weiteren Schritt S65 kann eine Funktion zur Erhöhung des dynamischen Laststromes aller betreffenden untergeordneten Knoten aufgerufen werden.

Bei den in den Figuren 5, 6 dargestellten Abläufen wird die Leistung für den jeweiligen Knoten gesteigert, indem der Stromgrenzwert eines untergeordneten Knotens um einen bestimmten Faktor nach oben hin versetzt wird. Ein untergeordneter Knoten wird nun seinerseits diese Erhöhung an seine untergeordneten Knoten weitergeben, bis letztendlich die in den Endknoten 3,4, vorgesehenen Lasten die Erhöhungsanforderung physikalisch umsetzen. Kommt es dadurch zu einer Überschreitung des Gesamtstromgrenzwertes, kann der in Fig. 4 dargestellte Regelalgorithmus in einem unmittelbar darauffolgenden Iterationsschritt die elektrische Leistung sofort wieder reduzieren und somit einen sicheren Überlastschutz bieten. Waren umgekehrt alle Netzkapazitäten frei, bleibt die Leistungserhöhung bestehen und der Ablauf zur Erhöhung der Leistung setzt sich mit dem nächsten Knoten fort. Auf diese Weise kann sichergestellt werden, dass in gleichem Ausmaß nacheinander alle Knoten eines übergeordneten Knotens, wieder ihre elektrische Leistung auf ihren jeweiligen maximalen Leistungsgrenzwert oder bis zur nächsten Leistungsreduktionsanforderung erhöhen.

Durch die ständige Neubewertung und den jeweiligen Bezug auf den aktuell fließenden Strom wird mithilfe des erfindungsgemäßen Regelalgorithmus auch sichergestellt, dass unterschiedlich schnelle Ausregelzeiten keinen Einfluss auf das Endergebnis haben. Mit dem erfindungsgemäßen Regelalgorithmus ist es möglich, kaskadierte Messpunkte auch virtuell abzubilden und durch gezielte Reduktionerhöhung von Ladeleistungen der an diesen Messpunkten angeschlossenen regelbaren Lasten, insbesondere Elektrofahrzeugbatterien, einen Maximalstrom auf den jeweiligen Stromgrenzwert der Messpunkte zu halten und zugleich die volle erlaubte elektrische Leistung auf die zur Verfügung stehenden Ladepunkte aufzuteilen.

Das erfindungsgemäße computerimplementierte Verfahren zur Regelung einer Stromversorgung durch ein lokales elektrisches Versorgungsnetz 1 eignet sich für beliebige regelbare Lasten und Stromgeneratoren, die an Endknoten des in einer Baumstruktur hierarchisch aufgebauten lokalen Versorgungsnetzes 1 angeschlossen sind. Das erfindungsgemäße computerimplementierte Verfahren eignet sich insbesondere zur Herstellung einer Ladeinfrastruktur für Fahrzeugbatterien einer Flotte von Elektrofahrzeugen eines Unternehmens. Das lokale Versorgungsnetz 1 dient zu einer effizienten Aufladung von regelbaren Lasten und vermeidet ungewollte Lastspitzen.

## Patentansprüche

1. Verfahren zur Regelung einer Stromversorgung durch ein lokales elektrisches Versorgungsnetz (1), wobei das lokale Versorgungsnetz (1) einen Wurzelknoten (2-0) und Endknoten (3, 4) aufweist, die in einer Baumstruktur miteinander hierarchisch verschaltet sind, wobei ausgehend von dem Wurzelknoten (2-0) der Baumstruktur elektrische Ströme, die zwischen einem übergeordneten in einer Hierarchieebene des Versorgungsnetzes (1) befindlichen Verteil-Knoten (2) über Stromleitungen (6) des Versorgungsnetzes (1) und einem oder mehreren untergeordneten in einer direkt darunterliegenden Hierarchieebene des Versorgungsnetzes (1) befindlichen Knoten (2, 3, 4) fließen, über alle Hierarchieebenen des Versorgungsnetzes (1) hinweg bis hin zu den Endknoten (3, 4) des lokalen Versorgungsnetzes (1) iterativ so lange angepasst werden, bis die Summe der zwischen dem jeweiligen übergeordneten Verteil-Knoten (2) des Versorgungsnetzes (1) und dessen untergeordneten Knoten (2, 3, 4) fließenden gemessenen Ströme innerhalb zulässiger Stromgrenzwerte des betreffenden übergeordneten Verteil-Knotens (2) und der Endknoten (3, 4) liegen.

2. Verfahren nach Anspruch 1, wobei die Endknoten (3, 4) des lokalen Versorgungsnetzes (1) regelbare oder nicht regelbare Lasten, die über das lokale Versorgungsnetz (1) mit elektrischem Strom versorgt oder geladen werden, und regelbare oder nicht regelbare Stromgeneratoren aufweisen, die elektrischen Strom in das lokale Versorgungsnetz (1) einspeisen.

3. Verfahren nach Anspruch 1 oder 2, wobei jeder Knoten (2, 3, 4) des Versorgungsnetzes (1) über einen oder mehrere erste Stromanschlüsse des jeweiligen Knotens (2, 3, 4) elektrische Ströme von übergeordneten Verteil-Knoten (2) des lokalen Versorgungsnetzes (1) empfängt oder an den übergeordneten Verteil-Knoten (2) abgibt und wobei elektrische Ströme über einen oder mehrere Stromanschlüsse eines Verteil-Knotens (2) an dessen untergeordnete Knoten (2, 3, 4) innerhalb des lokalen Versorgungsnetzes (1) abgegeben oder von den untergeordneten Knoten (2, 3, 4) empfangen werden.

4. Verfahren nach einem der vorangehenden Ansprüche 1 bis 3, wobei die zwischen einem übergeordneten Verteil-Knoten (2) des lokalen Versorgungsnetzes (1) und dessen untergeordnete Knoten (2, 3, 4) fließenden elektrischen Ströme durch an den Knoten (2, 3, 4) vorgesehene Stromsensoren gemessen werden.

5. Verfahren nach Anspruch 4, wobei Stromwerte der von den Stromsensoren gemessenen Ströme über Kommunikationsverbindungen (7) an eine zentrale Steuereinheit (5) des lokalen Versorgungsnetzes (1) übermittelt werden, die auf Basis der von den Stromsensoren eines Knotens (2, 3, 4) übermittelten Stromwerte für den Knoten (2, 3, 4) einen Summenstromwert, $I_{SUM}$, aller gemessenen elektrischen Ströme berechnet.

6. Verfahren nach Anspruch 5, wobei durch die zentrale Steuereinheit (5) des lokalen Versorgungsnetzes (1) für jeden übergeordneten Verteil-Knoten (2) ein Überschussstromwert als Differenz, $I_{diff}$, zwischen dem aktuell von dem jeweiligen übergeordneten Verteil-Knoten (2) an dessen untergeordnete Knoten (2, 3, 4) abgegebenen elektrischen Strom, $I_{act}$, und einem Stromgrenzwert, $I_{limit}$, des jeweiligen übergeordneten Verteil-Knotens (2) berechnet wird.

7. Verfahren nach Anspruch 6, wobei durch die zentrale Steuereinheit (5) des lokalen Versorgungsnetzes (1) für jeden übergeordneten Verteilknoten (2) des lokalen Versorgungsnetzes (1) der für den übergeordneten Verteil-Knoten (2) des lokalen Versorgungsnetzes (1) berechnete Überschussstromwert, $I_{diff}$, durch den berechneten Summenstromwert, $I_{SUM}$, aller von dem jeweiligen übergeordneten Verteil-Knoten (2) an dessen untergeordnete Knoten (2, 3, 4) abgegebenen elektrischen Ströme zur Berechnung eines Aufteilungsfaktors, AF, für den jeweiligen übergeordneten Verteil-Knoten (2) geteilt werden.

**8.** Verfahren nach Anspruch 7,
wobei durch die zentrale Steuereinheit (5) des lokalen Versorgungsnetzes (1) die Stromgrenzwerte, $I_{limit}$, der untergeordneten Knoten (2, 3, 4) in Abhängigkeit des für deren übergeordneten Verteil-Knoten (2) berechneten Aufteilungsfaktors, AF, aktualisiert werden.

**9.** Verfahren nach Anspruch 8,
wobei die elektrische Leistung einer regelbaren Last eines Endknotens (3) des lokalen Versorgungsnetzes (1) durch einen Leistungscontroller (3C) des Endknotens (3) entsprechend dem aktualisierten Stromgrenzwert des Endknotens (3) eingestellt wird, wobei der Leistungscontroller (3C) des Endknotens (3) den aktualisierten Stromgrenzwert von der zentralen Steuereinheit (5) des lokalen Versorgungsnetzes (1) über eine zugehörige Kommunikationsverbindung (7) erhält.

**10.** Verfahren nach einem der vorangehenden Ansprüche 2 bis 9, wobei die regelbaren Lasten des lokalen Versorgungsnetzes (1) Elektrofahrzeuge mit Fahrzeugbatterien aufweisen, die über das lokale Versorgungsnetz (1) aufgeladen werden.

**11.** Verfahren nach einem der vorangehenden Ansprüche,
wobei zur Steigerung der elektrischen Leistung der regelbaren Lasten des lokalen Versorgungsnetzes (1) ausgehend von dessen Wurzelknoten (2-0) über alle Hierarchieebenen des lokalen Versorgungsnetzes (1) hinweg bis hin zu den Endknoten (3, 4) die Stromgrenzwerte der Knoten des lokalen Versorgungsnetzes (1) iterativ erhöht werden.

**12.** Lokales Versorgungsnetz (1) zur Versorgung von Lasten mit elektrischem Strom,

wobei das lokale Versorgungsnetz (1) einen Wurzelknoten (2-0) und Endknoten (3, 4) aufweist, die in einer Baumstruktur miteinander hierarchisch verschaltet sind,
wobei durch eine zentrale Steuereinheit (5) des lokalen Versorgungsnetzes (1) ausgehend von dem Wurzelknoten (2-0) der Baumstruktur elektrische Ströme, die zwischen einem übergeordneten in einer Hierarchieebene des lokalen Versorgungsnetzes (1) befindlichen Verteil-Knoten (2) über Stromleitungen (6) des lokalen Versorgungsnetzes (1) und einem oder mehreren untergeordneten in einer direkt darunterliegenden Hierarchieebene des lokalen Versorgungsnetzes (1) befindlichen Knoten (2, 3, 4) fließen über alle Hierarchieebenen des lokalen Versorgungsnetzes (1) hinweg bis hin zu den Endknoten (3, 4) des lokalen Versorgungsnetzes (1) iterativ so lange anpassbar sind, bis die Summe der Stromwerte der zwischen dem jeweiligen übergeordneten Verteil-Knoten (2) des lokalen Versorgungsnetzes (1) und dessen untergeordneten Knoten (2, 3, 4) fließenden gemessenen elektrischen Ströme innerhalb zulässiger Stromgrenzwerte des betreffenden übergeordneten Verteil-Knotens (2) und der Endknoten (3, 4) liegen.

**13.** Versorgungsnetz nach Anspruch 12,
wobei die zentrale Steuereinheit (5) des lokalen Versorgungsnetzes (1) einen Datenspeicher aufweist, der Stromgrenzwerte der Knoten (2, 3, 4) des lokalen Versorgungsnetzes (1) und durch Stromsensoren gemessene Stromwerte von zwischen Knoten (2, 3, 4) des lokalen Versorgungsnetzes (1) fließenden elektrischen Ströme speichert.

**14.** Versorgungsnetz nach Anspruch 12 oder 13,
wobei an Verteil-Knoten (2) des lokalen Versorgungsnetzes (1) Endknoten (3, 4) anschließbar oder Endknoten (3,4) von Verteil-Knoten (2) des lokalen Versorgungsnetzes (1) entfernbar sind.

**15.** Versorgungsnetz nach einem der Ansprüche 12-14, wobei die Endknoten (3, 4) Lasten aufweisen, die elektrischen Strom verbrauchen, und/oder Stromgeneratoren aufweisen, die elektrischen Strom generieren.

**Claims**

**1.** Method for controlling power supply through a local electric power network (1),

wherein the local power network (1) has a root node (2-0) and end nodes (3, 4) hierarchically interconnected in a tree structure,

wherein, starting from the root node (2-0) of the tree structure, electric currents, which flow between a superordinate distribution node (2) in a hierarchy level of the power network (1), via power lines (6) of the power network (1), and one or more subordinate nodes (2, 3, 4) in a directly underneath hierarchy level of the power network (1), are adapted iteratively across all hierarchy levels of the power network (1) up until the end nodes (3, 4) of the local power network (1) until the sum of the measured currents flowing between the relevant superordinate distribution node (2) of the power network (1) and its subordinate nodes (2, 3, 4) is within admissible current limits of the relevant superordinate distribution node (2) and of the end nodes (3, 4).

2. Method according to claim 1,
   wherein the end nodes (3, 4) of the local power network (1) include controllable or uncontrollable loads, supplied with electric current or charged via the local power network (1), and controllable or uncontrollable current generators, which feed electric current into the local power network (1) .

3. Method according to either claim 1 or claim 2,
   wherein each node (2, 3, 4) of the power network (1) receives electric currents from superordinate distribution nodes (2) of the local power network (1) or outputs them to the superordinate distribution node (2), via one or more first power connections of the relevant node (2, 3, 4), and wherein electric currents are outputted to subordinate nodes (2, 3, 4) of a distribution node (2) within the local power network (1) or received from the subordinate nodes (2, 3, 4), via power connections of said distribution node.

4. Method according to any of preceding claims 1 to 3,
   wherein the electric currents flowing between a superordinate distribution node (2) of the local power network (1) and its subordinate nodes (2, 3, 4) are measured by current sensors provided at the nodes (2, 3, 4).

5. Method according to claim 4,
   wherein current values of the currents measured by the current sensors are passed, via communication links (7), to a central control unit (5) of the local power network (1), which calculates a total current value, $I_{SUM}$, of all measured electric currents on the basis of the current values for a node (2, 3, 4) which are passed on by the current sensors of the node (2, 3, 4).

6. Method according to claim 5,
   wherein, for each superordinate distribution node (2), the central control unit (5) of the local power network (1) calculates an excess current value as a difference, $I_{diff}$, between the electric current, $I_{act}$, currently outputted from the relevant superordinate distribution node (2) to its subordinate nodes (2, 3, 4) and a current limit, $I_{limit}$, of the relevant superordinate distribution node (2).

7. Method according to claim 6,
   wherein, for each superordinate distribution node (2) of the local power network (1), the central control unit (5) of the local power network (1) divides the excess current value, $I_{diff}$, calculated for the superordinate distribution node (2) of the local power network (1) by the calculated total current value, $I_{SUM}$, of all electric currents outputted from the relevant superordinate distribution node (2) to its subordinate nodes (2, 3, 4), so as to calculate an allocation factor, AF, for the relevant superordinate distribution node (2).

8. Method according to claim 7,
   wherein the central control unit (5) of the local power network (1) updates the current limits, $I_{limit}$, of the subordinate nodes (2, 3, 4) as a function of the allocation factor, AF, calculated for the superordinate distribution node (2) thereof.

9. Method according to claim 8,
   wherein the electric power of a controllable load of an end node (3) of the local power network (1) is set by a power controller (3C) of the end node (3) in accordance with the updated current limit of the end node (3), the power controller (3C) of the end node (3) receiving the updated current limit from the central control unit (5) of the local power network (1) via an associated communication link (7).

10. Method according to any of preceding claims 2 to 9,
    wherein the controllable loads of the local power network (1) include electric vehicles having vehicle batteries which are charged via the local power network (1).

11. Method according to any of the preceding claims,

wherein, to increase the electric power of the controllable loads of the local power network (1), starting from the root node (2-0) thereof, the current limits of the nodes of the local power network (1) are increased iteratively across all hierarchy levels of the local power network (1) up until the end nodes (2, 3).

**12.** Local power network (1) for supplying loads with electric current,

wherein the local power network (1) has a root node (2-0) and end nodes (3, 4) hierarchically interconnected in a tree structure,

wherein, starting from the root node (2-0) of the tree structure, electric currents, which flow between a superordinate distribution node (2) in a hierarchy level of the power network (1), via power lines (6) of the local power network (1), and one or more subordinate nodes (2, 3, 4) in a directly underneath hierarchy level of the power network (1), can be adapted iteratively across all hierarchy levels of the power network (1) up until the end nodes (3, 4) of the local power network (1), by a central control unit (5) of the local power network (1), until the sum of the current values of the measured electric currents flowing between the relevant superordinate distribution node (2) of the local power network (1) and its subordinate nodes (2, 3, 4) is within admissible current limits of the relevant superordinate distribution node (2) and of the end nodes (3, 4).

**13.** Power network according to claim 12,

wherein the central control unit (5) of the local power network (1) comprises a data store which stores current limits of the nodes (2, 3, 4) of the local power network (1) and current values, measured by current sensors, of electric currents flowing between nodes (2, 3, 4) of the local power network (1).

**14.** Power network according to either claim 12 or claim 13, wherein end nodes (3, 4) can be connected to distribution nodes (2) of the local power network (1), or end nodes (3, 4) can be removed from distribution nodes (2) of the local power network (1).

**15.** Power network according to any of claims 12 to 14, wherein the end nodes (3, 4) include loads, which consume electric current, and/or current generators, which generate electric current.

**Revendications**

**1.** Procédé de régulation d'une alimentation en courant au moyen d'un réseau d'alimentation électrique local (1),

dans lequel le réseau d'alimentation local (1) comporte un noeud racine (2-0) et des noeuds d'extrémité (3, 4) qui sont interconnectés hiérarchiquement dans une structure arborescente,

dans lequel en partant du noeud racine (2-0) de la structure arborescente, des courants électriques qui circulent entre un noeud de distribution parent (2) situé au-dessus dans un niveau hiérarchique du réseau d'alimentation (1) via des lignes de courant (6) du réseau d'alimentation (1) et un ou plusieurs noeuds enfants (2, 3, 4) situés directement en dessous du niveau hiérarchique du réseau d'alimentation (1), sont adaptés de manière itérative à tous les niveaux hiérarchiques du réseau d'alimentation (1) jusqu'aux noeuds d'extrémité (3, 4) du réseau d'alimentation local (1) jusqu'à ce que la somme des courants mesurés circulant entre le noeud de distribution parent (2) respectif du réseau d'alimentation (1) et ses noeuds enfants (2, 3, 4) soit dans des valeurs limites de courant admissibles du noeud de distribution parent (2) respectif et des noeuds d'extrémité (3, 4) .

**2.** Procédé selon la revendication 1,

dans lequel les noeuds d'extrémité (3, 4) du réseau d'alimentation local (1) comportent des charges régulables ou non régulables, qui sont alimentées ou chargées en courant électrique par l'intermédiaire du réseau d'alimentation local (1), et des générateurs de courant régulables ou non régulables, qui alimentent le réseau d'alimentation local (1) en courant électrique.

**3.** Procédé selon la revendication 1 ou 2,

dans lequel chaque noeud (2, 3, 4) du réseau d'alimentation (1) reçoit, par l'intermédiaire d'une ou plusieurs premières connexions électriques du noeud (2, 3, 4) respectif, des courants électriques provenant de noeuds de distribution parents (2) du réseau d'alimentation local (1) ou les délivre au noeud de distribution parent (2), et dans lequel des courants électriques sont délivrés par l'intermédiaire d'une ou plusieurs connexions électriques d'un noeud de distribution (2), à ses noeuds enfants (2, 3, 4) dans le réseau d'alimentation local (1) ou sont reçus des noeuds enfants (2, 3, 4).

**4.** Procédé selon l'une des revendications 1 à 3 précédentes, dans lequel les courants électriques circulant entre un noeud de distribution parent (2) du réseau d'alimentation local (1) et ses noeuds enfants (2, 3, 4) sont mesurés au moyen de capteurs de courant prévus au niveau des noeuds (2, 3, 4).

**5.** Procédé selon la revendication 4,
dans lequel des valeurs de courant des courants mesurés par les capteurs de courant sont transmises à une unité de commande centrale (5) du réseau d'alimentation local (1) par l'intermédiaire de liaisons de communication (7), l'unité de commande calculant une valeur de courant totale, $I_{SUM}$, de tous les courants électriques mesurés sur la base des valeurs de courant pour les noeuds (2, 3, 4) transmises par les capteurs de courant d'un noeud (2, 3, 4).

**6.** Procédé selon la revendication 5,
dans lequel une valeur de courant en excès est calculée par l'unité de commande centrale (5) du réseau d'alimentation local (1) pour chaque noeud de distribution parent (2), par la différence, $I_{diff}$, entre le courant électrique, $I_{act}$, délivré par le noeud de distribution parent (2) respectif à ses noeuds enfants (2, 3, 4), et une valeur limite de courant, $I_{limit}$, du noeud de distribution parent (2) respectif.

**7.** Procédé selon la revendication 6,
dans lequel au moyen de l'unité de commande centrale (5) du réseau d'alimentation local (1), pour chaque noeud de distribution parent (2) du réseau d'alimentation local (1), la valeur de courant en excès, $I_{diff}$, calculée pour le noeud de distribution parent (2) du réseau d'alimentation local (1) est divisée par la valeur de courant totale calculée, $I_{SUM}$, de tous les courants électriques délivrés par le noeud de distribution parent (2) respectif à ses noeuds enfants (2, 3, 4) pour calculer un facteur de répartition, AF, pour le noeud de distribution parent (2) respectif.

**8.** Procédé selon la revendication 7,
dans lequel les valeurs limites de courant, $I_{limit}$, des noeuds parents (2, 3, 4) sont mises à jour en fonction du facteur de répartition, AF, calculé pour leur noeud de répartition parent (2), par l'unité de commande centrale (5) du réseau d'alimentation local (1).

**9.** Procédé selon la revendication 8,
dans lequel la puissance électrique d'une charge régulable d'un noeud d'extrémité (3) du réseau d'alimentation local (1) est réglée par un contrôleur de puissance (3C) du noeud d'extrémité (3) en fonction de la valeur limite de courant mise à jour du noeud d'extrémité (3), dans lequel le contrôleur de puissance (3C) du noeud d'extrémité (3) obtient la valeur limite de courant mise à jour de l'unité de commande centrale (5) du réseau d'alimentation local (1) via une liaison de communication (7) associée.

**10.** Procédé selon l'une des revendications 2 à 9 précédentes, dans lequel les charges régulables du réseau d'alimentation local (1) sont des véhicules électriques équipés de batteries de véhicule qui sont chargées via le réseau d'alimentation local (1).

**11.** Procédé selon l'une des revendications précédentes,
dans lequel pour augmenter la puissance électrique des charges régulables du réseau d'alimentation local (1) en partant de son noeud racine (2-0), en passant par tous les niveaux hiérarchiques du réseau d'alimentation local (1), jusqu'aux noeuds d'extrémité (3, 4), les valeurs limites de courant des noeuds du réseau d'alimentation local (1) sont augmentées de manière itérative.

**12.** Réseau d'alimentation local (1) destiné à alimenter des charges en courant électrique ,
dans lequel le réseau d'alimentation local (1) comporte un noeud racine (2-0) et des noeuds d'extrémité (3, 4) qui sont interconnectés hiérarchiquement dans une structure arborescente, dans lequel au moyen d'une unité de commande centrale (5) du réseau d'alimentation local (1) en partant du noeud racine (2-0) de la structure arborescente, des courants électriques qui circulent entre un noeud de distribution parent (2) situé au-dessus dans un niveau hiérarchique du réseau d'alimentation local (1) via des lignes de courant (6) du réseau d'alimentation local (1) et un ou plusieurs noeuds parents (2, 3, 4) situés directement en dessous du niveau hiérarchique du réseau d'alimentation (1), peuvent être adaptés de manière itérative à tous les niveaux hiérarchiques du réseau d'alimentation local (1) jusqu'aux noeuds d'extrémité (3, 4) du réseau d'alimentation local (1) jusqu'à ce que la somme des valeurs de courant des courants mesurés circulant entre le noeud de distribution parent (2) respectif du réseau d'alimentation local (1) et ses noeuds enfants (2, 3, 4) soit dans des valeurs limites de courant électrique admissibles du noeud de distribution parent (2) respectif et des noeuds d'extrémité (3, 4).

**13.** Réseau d'alimentation selon la revendication 12,
dans lequel l'unité de commande centrale (5) du réseau d'alimentation local (1) comporte une mémoire de données qui stocke les valeurs limites de courant des noeuds (2, 3, 4) du réseau d'alimentation local (1) et des valeurs de courant mesurées par des capteurs de courant de courants électriques circulant entre des noeuds (2, 3, 4) du réseau d'alimentation local (1).

**14.** Réseau d'alimentation selon la revendication 12 ou 13, dans lequel des noeuds d'extrémité (3, 4) peuvent être connectés à des noeuds de distribution (2) du réseau d'alimentation local (1) ou des noeuds d'extrémité (3, 4) peuvent être déconnectés de noeuds de distribution (2) du réseau d'alimentation local (1).

**15.** Réseau d'alimentation selon l'une des revendications 12 à 14, dans lequel les noeuds d'extrémité (3, 4) comportent des charges qui consomment du courant électrique et/ou comportent des générateurs de courant qui génèrent du courant électrique.

FIG. 1

FIG. 2

FIG. 3

FIG. 4

FIG. 5

FIG. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 11056912 B1